Europäisches Patentamt

European Patent Office

Office européen des brevets

(19)

(11) Veröffentlichungsnummer: **0 249 746**
**A2**

(12)

# EUROPÄISCHE PATENTANMELDUNG

(21) Anmeldenummer: 87106998.5

(22) Anmeldetag: 14.05.87

(51) Int. Cl.4: **G02B 6/28** , G02F 1/13 , G02F 1/05

(30) Priorität: 12.06.86 DE 3619778

(43) Veröffentlichungstag der Anmeldung:
23.12.87 Patentblatt 87/52

(84) Benannte Vertragsstaaten:
**DE ES FR GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Krov, Walter, Dr.**
**Rosenheimerstrasse 20A**
**D-8012 Ottobrunn(DE)**
Erfinder: **Halldorsson, Thorsten**
**Daphnestrasse 15**
**D-8000 München 81(DE)**

(54) Lichtleitfaser für ein Datenbussystem.

(57) Die Lichtleitfaser für ein Datenbussystem ist zur längsseitigen Ankopplung von optoelektronischen Sende- und Empfangsstationen geeignet und weist eine koaxial verlaufende, lichtstreuende Ader auf, die eine Ein-bzw. Auskopplung von Licht in die bzw. aus der Lichtleitfaser durch die Mantelschicht hindurch ermöglicht.

FIG. 1

## Lichtleitfaser für ein Datenbussystem

Die Erfindung betrifft einen Lichtleiter für ein Datenbussystem zur längsseitigen Ankopplung von optoelektronischen Sende-und Empfangsstationen.

Aus der DE-OS 27 44 128 ist ein Wellenleiter mit einem längsseits angeordneten Detektor bekannt, bei dem der Wellenleiter im Bereich des Detektorfensters eine Streustelle aufweist. Durch diese Streustelle, die z.B. durch eine Kerbe oder eine Aussparung im Wellenleiter erzeugt wird, kann Licht entweder in den Wellenleiter eingekoppelt oder aus diesem abgezweigt werden. Derartige Ankoppelstellen sind jedoch aufwendig in der Herstellung und liegen, einmal ausgeführt, im wesentlichen fest.

Es ist Aufgabe der Erfindung, eine Lichtleitfaser für ein Datenbussystem zu schaffen, bei dem auf einfache Weise an beliebigen Stellen optoelektronische Sende-und Empfangsstationen ankoppelbar und bei Bedarf verschiebbar sind. Die Aufgabe wird durch eine nach den kennzeichnenden Merkmalen des Patentanspruch 1 ausgebildete Lichtleitfaser gelöst.

Lichtleitfasern mit Streuzellen sind zwar bereits aus der DE-OS 25 42 590 bekannt, jedoch dienen diese als Strahlungsquelle zur Erzeugung einer Anzeigevorrichtung, also z.B. zur Erzeugung sichtbarer alphanumerischer Zeichen. Aus diesem Grund weist auch die bekannte Lichtleitfaser in ihrem gesamten wellenleitenden Bereich Streuzentren auf. Eine Übertragung von Informationen ist also bei einer derartigen Lichtleitfaser wegen der hohen Dämpfung nur über eine Entfernung von wenigen mm oder cm möglich, so daß ein Einsatz in einem Datenbussystem nicht in Frage kommt.

Die Erfindung wird im folgenden anhand der in den Figuren teilweise schematisch beschriebenen Ausführungsbeispiele beschrieben.

Es zeigen:

Fig. 1 ein Datenbussystem mit einem Lichtleiter mit insgesamt vorhandenen bzw. eingeprägten Streuzentren;

Fig. 2 ein Datenbussystem mit einem Lichtleiter mit feldinduzierten Streubereichen;

Fig. 3 ein Datenbussystem mit einer kontinuierlich beleuchteten Lichtleitfaser und

Fig. 4 einen Querschnitt durch eine Lichtleitfaser mit aufgebrachten Elektroden.

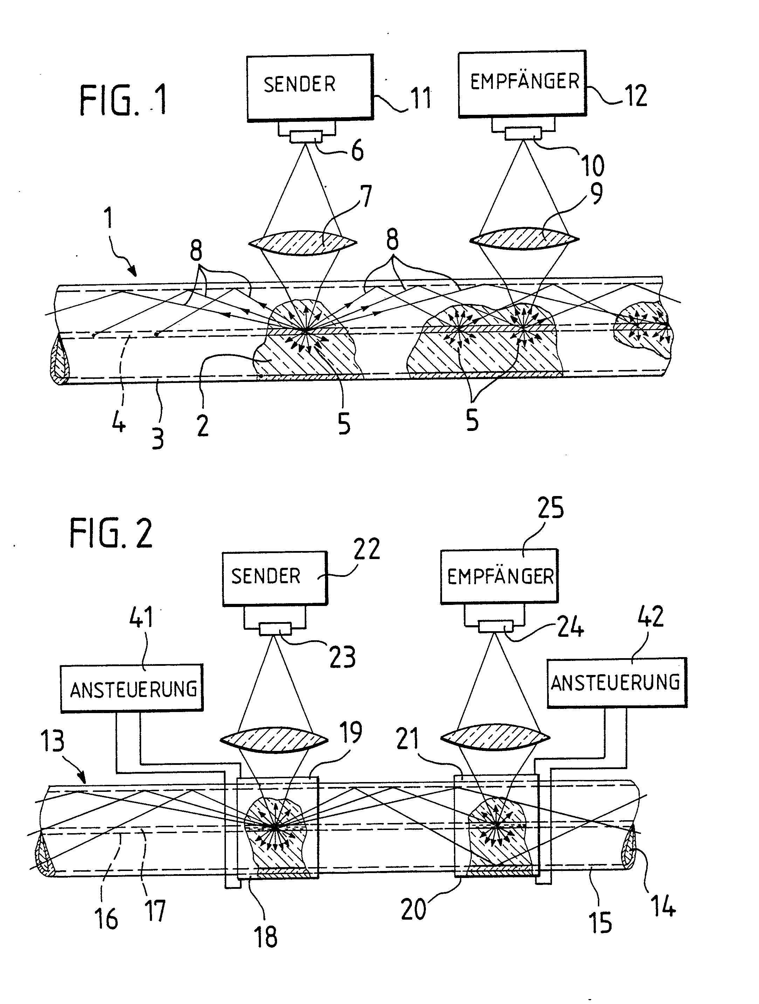

Die in Fig. 1 in einer teilweise aufgeschnittenen Längsansicht dargestellte Lichtleitfaser 1 ist als Multimodefaser ausgebildet, wobei der Durchmesser des Kernes 2 erheblich größer als die Wellenlänge des darin geleiteten Lichtes ist. Der Kern 2 ist in bekannter Weise von einer Mantelzone 3 umgeben, deren Brechungsindex sich von dem des Kernes 2 unterscheidet. Im Zentrum des Kernes 2 ist eine koaxial zum Kern verlaufende Ader 4 vorgesehen, welche entweder aus einem über seine gesamte Länge lichtstreuenden Material besteht, oder aus einem transparenten Material, in welchem durch gezielte, lokale Bestrahlung von außen, beispielsweise mittels UV-,Röntgen-oder Teilchenstrahlung, Streuzentren 5 hergestellt werden. Diese Streuzentren 5 in der Ader 4 und damit im Zentrum der Lichtleitfaser 1 haben die Aufgabe, eine z.B. von einer Strahlungsquelle 6 ausgesandte und über eine Optik 7 senkrecht zur optischen Achse der Lichtleitfaser 1 durch die Mantelschicht 3 hindurchtretende Strah-lung möglichst gleichmäßig in alle Raumrichtungen, also isotrop zu streuen. Dadurch wird erreicht, wie in Fig. 1 durch die Strahlen 8 angedeutet ist, daß ein Teil der Streustrahlung durch Totalreflexion an der Grenzfläche zwischen dem Kern 2 und der Mantelschicht 3 entlang der Faser in beiden Richtungen weitergeleitet wird. Im Falle einer über die gesamte Länge lichtstreuenden Ader 4 wird jedesmal beim Zusammentreffen der Streustrahlung 8 mit der zentralen Ader 4 ein Teil der Strahlung wieder isotrop gestreut. In dem dargestellten Falle mit lokalen Streuzentren 5 findet die erneute isotrop Streuung nur an diesen Streuzentren statt.

Strahlungsanteile, die von den Streuzentren ausgehen und in dem Winkelbereich außerhalb der Totalreflexionsbedingung liegen, treten durch die Mantelfläche 3 hindurch und können von dort aus über eine Empfangsoptik 9 auf einen Strahlungsempfänger 10 geleitet werden. Damit kann an jeder Stelle der Lichtleitfaser 1 Lichtstrahlung senkrecht zur optischen Achse eingespeist und an jeder Stelle wieder abgegriffen werden, ohne daß die Faser in irgendeiner Weise mechanisch bearbeitet oder der Signalfluß unterbrochen werden muß. Ein Datenbussystem kann mit einer derartigen Lichtleitfaser folglich in einfacher Weise dadurch aufgebaut werden, indem eine elektrooptische Strahlungsquelle 6, z.B. eine Lumineszenz-oder Laserdiode, verwendet wird, die über einen Sender 11 moduliert wird und analog dazu ein optoelektrischer Strahlungsempfänger 10, z.B. eine Fotodiode, an einen elektrischen Empfänger 12 ange schlossen wird.

Zwar erleidet die Strahlung entlang der Leitung als Funktion des Abstandes von der Einkoppelstelle eine zunehmende Dämpfung, die jedoch bei entsprechender Auslegung der Faser relativ niedrig gehalten werden kann, so daß sie bei für Datenbussysteme auftretenden Entfernungen von einigen 10 bis 100 m nicht ins Gewicht fällt. Hierzu dient folgende Betrachtung:

Es wird von einer einadrigen Multimode-Faser mit einem Kerndurchmesser im Bereich von 20 bis 600 $\mu$m ausgegangen, d.h. mit einem relativ großen Durchmesser gegenüber dem Durchmesser der lichtstreuenden Ader 4, der typischerweise im Bereich zwischen 5 und 10 $\mu$m liegen sollte, damit die Verluste durch die Streuung in Grenzen bleiben. Im Falle einer durchgehend streuenden Ader 4 kann die exponentielle Dämpfung in der Lichtleitfaser 1 zusammen mit der lichtstreuenden Ader 4 annäherungsweise als

$$I_z = I_o e^{-(\alpha_1 + \frac{D_2}{D_1} \alpha_2) z} \qquad (1)$$

ausgedrückt werden, wobei $\alpha_1$ den Dämpfungskoeffizienten der Lichtleitfaser ohne die lichtstreuende Ader, $\alpha_2$ den Extinktionskoeffizienten des lichtstreuenden Materials in der Ader 4, $D_1$ den Durchmesser des Faserkernes 2, $D_2$ den Durchmesser der Ader 4, $I_o$ die ursprüngliche Lichtintensität und $I_z$ die Intensität in der Entfernung z von der Einkoppelstelle bezeichnet. Wie die Formel zeigt, geht der Einfluß der Extinktion der lichtstreuenden Ader erst mit dem Verhältnis der Durchmesser der Ader 4 zum Faserkern 2 in den Exponenten der Formel ein, d.h. bei relativ niedrigem Verhältnis dieser Durchmesser kann ein relativ hoher Extinktionskoeffizient zugelassen werden. Der überwiegende Anteil der Extinktion der Strahlung in der lichtstreuenden Ader 4 entsteht durch Streuung. Damit eine möglichst isotrope Streuung in der Ader 4 entsteht, sollten die einzelnen Streuzentren möglichst klein sein, d.h. möglichst kleiner als die Wellenlänge des Lichtes (Rayleighstreuung) und in möglichst großer Dichte in der Ader verteilt sein, damit eine Mehrfachstreuung stattfindet, die eine gleichmäßige Winkelverteilung der Streuung fördert. Bei einer isotropen Streuung läßt sich an der Strahlung, die von jedem Streuzentrum ausgeht, der Anteil, der durch den Fasermantel hindurchtritt und damit für die Detektion zur Verfügung steht, sowie der Anteil, der durch Totalreflexion in beiden Richtungen weitergeleitet wird, bestimmen. Die Totalreflexion tritt für alle Winkel zur optischen Achse auf, die kleiner oder gleich der numerischen Apertur der Faser ist. Der Anteil $^\Omega\beta/_\pi$ der in jede der beiden Richtungen durch Totalreflexion geleitet wird, beträgt also (1 - cos $\beta$), wobei $\beta$ der Grenzwinkel für die Totalreflexion ist.

Die numerische Apertur A ist andererseits gegeben durch

$$A = \sin \beta = (n_1^2 - n_2^2)^{1/2}$$

wobei mit $n_1$ der Brechungsindex des Faserkernmaterials und mit $n_2$ der Brechungsindex des Mantelmaterials bezeichnet wird. Bei einer mittleren numerischen Apertur von A = 0,25 beträgt $\beta$ = 13,5° und es werden in jeder Richtung 2,7 % der eingestrahlten Leistung in der Faser weitertransportiert.

In erster Näherung kann die Dämpfung entlang der Faser mit zentral streuender Ader als

$$I_z = I_o e^{-(\alpha_1 + \frac{D_2}{D_1} (1 - \cos \beta)^{-1} \alpha_1) z} \qquad (2)$$

angenommen werden, vorausgesetzt, daß die Streuung in der streuenden Ader isotrop verläuft und daß er Absorptionskoeffizient des lichtstreuenden Materials der gleiche ist wie der des Kernmaterials. Bei einem Verhältnis der Durchmesser $D_2/D_1$ = 0,1 und $\beta$ = 13,5° ergibt sich

$$I_z = I_o e^{-4.7 \alpha_1 z} \qquad (3)$$

d.h. der Extinktionskoeffizient der Lichtleitfaser wird in diesem Beispiel um einen Faktor 5 höher, was bei den heutigen, sehr verlustarmen Fasermaterialien für den Anwendungsfall eines Datenbussystemes leicht verträglich ist.

Die obengenannte Abschätzung der Streuverluste entlang der Lichtleitfaser bezieht sich auf das Ausführungsbeispiel, bei dem die Ader 4 entlang ihrer gesamten Länge lichtstreuend ist. In denjenigen Ausführungsbeispielen, in denen die lichtstreuende Ader nur an diskreten Stellen lichtstreuend ist, sind die Streuverluste erheblich geringer. In erster Näherung ist die Dämpfung proportional zum Verhältnis des Durchmessers der Streuader und des Faserkernes, so daß unter Beibehaltung der Bezeichnungen aus der Formel 1 folgende Beziehung gilt.

3

$$I_z = I_0 \left(1 - \left(\frac{D_2}{D_1}\right)^n\right) e^{-\alpha_1 z} \qquad\qquad (4)$$

Hierbei bedeutet n die Anzahl der Streuzentren entlang der Faser.

Die Lichtleistung, die aus einem Streuzentrum weggestreut wird und nicht innerhalb des Winkelbereiches der Totalreflexion in der Faser liegt, durchquert den Mantel und steht senkrecht zur Achse der Faser einem Empfänger zur Verfügung. Mit einer entsprechenden Optik wird ein definierter Raumwinkel der Streustrahlung erfaßt. Die Streustrahlung, die weder entlang der Faser weitergeleitet, noch von der Optik erfaßt wird, gilt als Verlustleistung. Üblicherweise wird der Empfangswinkel einer Empfangsoptik im Bereich von 45° liegen und die effektive Empfangsleistung damit etwa 15 % betragen.

Durch die Streuung des Informationssignals eines Senders an verschiedenen Orten entlang der Faser wird am Ort des Empfängers das gleiche Signal mit unterschiedlicher Zeitverzögerung und unterschiedlicher Amplitude eintreffen. Da die Einstreuung vom Sender bis zum Empfänger auf dem kürzesten Weg mit der geringsten Dämpfung behaftet ist, wird an kurzen Signalpulsen weniger die ansteigende Flanke des Impulses als eher die Länge des Impulses und die abfallende Flanke beeinträchtigt. Ein Wegstreckenunterschied des Signals um 20 cm erzeugt einen Laufzeitunterschied von einer nsec. Gegenüber der Impulsverbreiterung in normalen Multimodefasern ist dieser Effekt in der erfindungsgemäßen Lichtleitfaser etwas ausgeprägter, da der Lichtweg hier vom Sender in beide Richtungen verläuft und der Empfänger damit Echosignale von Streuzentren hinter dem Sender noch detektiert.

Ein Effekt, der dieser Störung entgegenwirkt, ist die starke Abnahme des Signals durch die isotrope Winkelverteilung bei jedem einzelnen Streuprozeß. Eine Signalwelle, die bezüglich der Anzahl eine Streuung mehr erfahren hat als eine zweite, hat bei dem obengenannten Zahlenbeispiel nur die 2,7 %ige Leistung. Die zusätzliche Impulsverbreiterung bei einer Datenübertragung über die erfindungsgemäße Lichtleitfaser dürfte damit gegenüber derjenigen in einer normalen Multimodefaser vernachlässigbar sein.

Bei dem in Fig. 2 dargestellten Ausführungsbeispiel ist die Lichtleitfaser 13 wiederum als Multimodefaser mit einem Kern 14 und einer Mantelschicht 15 ausgebildet. In dem Kern 14 befindet sich eine koaxial zur Faserrichtung verlaufende Kapillare 16, die mit einem Flüssigkristall 17 gefüllt ist. Durch je zwei gegenüberliegende, halbschalenförmige Elektroden 18 und 19 bzw. 20 und 21, die jeweils mit einer steuerbaren Spannungsquelle 41 bzw. 42 verbunden sind, wird jeweils ein elektrisches Feld erzeugt, welches den Flüssigkristall im Bereich der Elektroden von einem transparenten in einen opaken Zustand versetzt. Durch Fenster in den Elektroden 19 bzw. 21 kann Licht von einer über einen Sender 22 gesteuerten Lumineszenzdiode 23 in die Faser eingekoppelt bzw. über eine Fotodiode 24, die mit einem Empfänger 25 gekoppelt ist, ausgekoppelt werden. Da die erzeugten Streuzentren in diesem Fall auf einen sehr kurzen Bereich lokalisiert werden können, ist die Dämpfung hier gegenüber einer durchgehend streuenden Ader deutlich geringer.

Anstelle der mit einem Flüssigkristall gefüllten Kapillaren kann auch eine Feststoffader eingesetzt werden, dessen Material entweder vollständig ferroelektrisch ist oder aus einem Gemisch zwischen einem amorphem Material und einem feinkörnigen ferroelektrischen Material besteht. Entsprechende ferroelektrische Materialien, die ohne Feldeinwirkung vollkommen transparent sind, ihre optischen Eigenschaften jedoch bei Anlegung eines elektrischen Feldes ändern, ist z.B. Blei-Lanthan-Zirkon-Titanat (PLZT).

Zur Herstellung der obengenannten Lichtleitfaserarten bedarf es nur leichter Modifikationen bzw. Ergänzungen der bestehenden Glasfaserherstellungstechnik, abhängig davon, ob als streuende bzw. unter Feldeinwirkung streufähige Materialien ein Feststoff oder eine Flüssigkeit verwendet wird. Bei Feststoffen können die bestehenden Produktionstechniken, z.B. Schmelztiegeltechnik oder Gasphasen-Epitaxi vollständig übernommen werden mit Ergänzung eines dritten inneren zentralen Kanals für die lichtstreuende Ader. Zur Herstellung eines offenen Kanals für eine Flüssigkeitsfüllung würde die Schmelztiegeltechnik bei Verschmelzung und Herausziehen zwier zylindrischer Rohre am geeignetesten sein. Das Befüllen der Kapillare mit einer Flüssigkeit geschieht vorteilhafterweise unter Vakuum unter Ausnutzung der Kapillarkräfte.

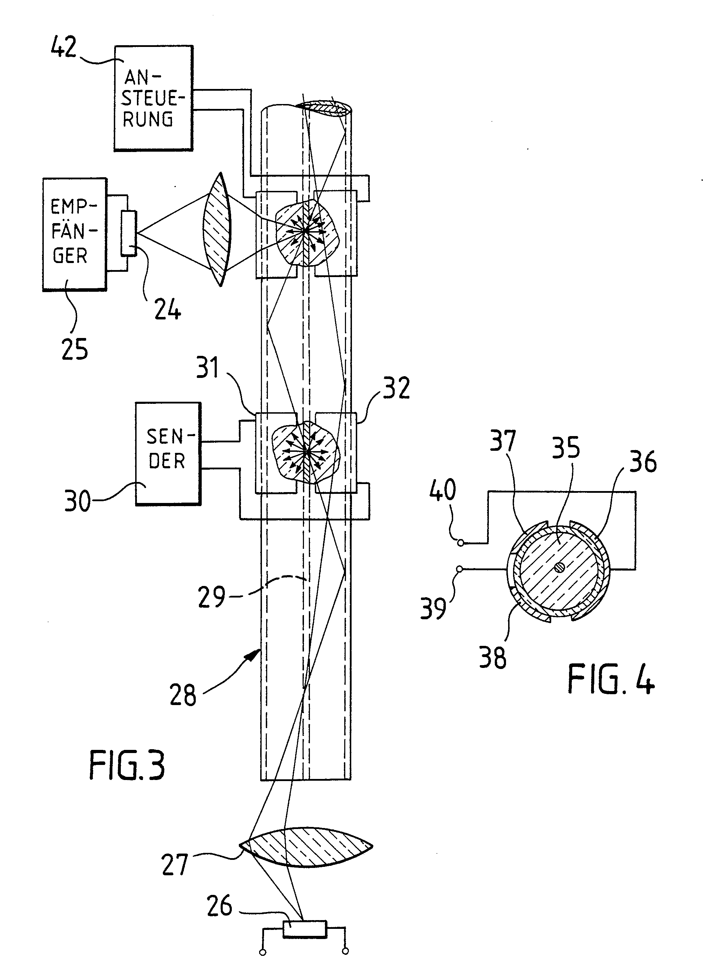

Bei dem in Fig. 3 dargestellten Ausführungsbeispiel wird das Licht mit einer entsprechenden Informationskodierung nicht, wie in den obengenannten Ausführungsbeispielen, an einzelnen Stellen durch den Fasermantel eingekoppelt, sondern es wird nur an einem Ende der Lichtleitfaser eine Lichtquelle 26 über eine Optik 27 angekoppelt, deren Licht mit relativ niedriger Dämpfung durch die Faser 28 geleitet wird. Die Licht-leitfaser 28 enthält, wie in dem Ausführungsbeispiel gemäß Fig. 2, eine über ein elektrisches Feld in einen lichtstreuenden Zustand versetzende Ader 29. An beliebigen Stellen der Lichtleitfaser 28 können nun sog. Streumodulatoren 30 angebracht werden, die mit einer Fig. 2 entsprechenden Elektrodenanordnung 31,

4

32 versehen sind und deren Aufgabe es ist, die zu übertragende Information der in der Lichtleitfaser fortschreitenden Lichtwelle durch Ansteuerung der lichtstreuenden Ader 29 aufzuprägen. Dies geschieht also nur über das angelegte äußere Feld, also ohne Lichtquelle und Optik. Die derart aufgeprägte Information kann wiederum durch eine Empfangseinrichtung gemäß der in Fig. 2 abgerufen werden.

Fig. 4 zeigt einen Querschnitt durch eine erfindungsgemäße Lichtleitfaser, wobei auf der Oberfläche der Mantelschicht 35 zwei elektrisch leitende und voneinander isolierte Elektroden 36 und 37 aufgedampft oder aufgeklebt sind. Zur Ein-bzw. Auskopplung von Licht weist die Elektrode 37 ein kreisförmiges Fenster 38 auf. Die Ansteuerung der Elektroden erfolgt über Zuleitungen 39 und 40.

## Ansprüche

1. Lichtleitfaser für ein Datenbussystem zur längsseitigen Ankopplung von optoelektronischen Sende- und Empfangsstationen, dadurch **gekennzeichnet,** daß die Lichtleitfaser (1.13.28) eine koaxial verlaufende, lichtstreuende Ader (4; 16,17; 29) aufweist.

2. Lichtleitfaser nach Anspruch 1, dadurch **gekennzeichnet,** daß die lichtstreuende Ader (4) ein Gemisch aus einem amorphen, transparenten Material und einen darin gleichmäßig verteilten, feinkörnigen Zusatz aufweist.

3. Lichtleitfaser nach Anspruch 1 oder 2, dadurch **gekennzeichnet,** daß die lichtstreuende Ader (4) ein transparentes Material aufweist, in welchem durch gezielte, lokale Bestrahlung von außen mittels elektromagnetischer Wellen oder Teilschenstrahlung Streuzentren (5) herstellbar sind.

4. Lichtleiter nach Anspruch 1 dadurch **gekennzeichnet,** daß die lichtstreuende Ader aus einer mit einem Flüssigkristall (17) gefüllten Kapillaren (16) besteht.

5. Lichtleite nach einem der Ansprüche 1 bis 4, dadurch **gekennzeichnet,** daß die lichtstreuende Ader ein ferroelektrisches Material aufweist.

6. Lichtleitfaser nach einem der Ansprüche 1 bis 5, dadurch **gekennzeichnet,** daß der Streufaktor der lichtstreuenden Ader (17,29) über ein von außen angelegtes Feld steuerbar ist.

7. Lichtleiter nach einem der Ansprüche 3 bis 5, dadurch **gekennzeichnet,** daß die Lichtleitfaser (13,28) auf ihrer Mantelschicht (15,35) im Bereich einer Sende-oder Empfangsstation (22,30;25) zwei transparente, elektrisch leitende, voneinander isolierte, gegenüberliegende Beschichtungen (18,19; 20,21; 31,32; 26,37) zur Erzeugung eines auf die lichtstreuende Ader (17,29) wirkenden elektrischen Feldes aufweist.

8. Lichtleitfaser nach einem der Ansprüche 1 bis 6, dadurch **gekennzeichnet,** daß die Lichtleitfaser (1,13,28)einen Kerndurchmesser von 20 bis 600 μm und die lichtstreuende Ader (4; 16,17; 29) einen Durchmesser von 5 bis 10 μm aufweist.

0 249 746

**FIG. 1**

SENDER — 11   EMPFÄNGER — 12

**FIG. 2**

25

SENDER — 22   EMPFÄNGER

41 ANSTEUERUNG   42 ANSTEUERUNG

0017

FIG.3

FIG.4

10017